# EUROPÄISCHE PATENTSCHRIFT

(11) **EP 3 360 147 B1**
(45) Veröffentlichungstag und Bekanntmachung des Hinweises auf die Patenterteilung: **14.08.2019**
(21) Anmeldenummer: 16795305.8
(22) Anmeldetag: 11.11.2016
(51) Int. Cl.: H01F 27/04

(54) **VORRICHTUNG ZUR ELEKTRISCHEN VERBINDUNG VON WENIGSTENS VIER ELEKTRISCHEN LEITERN**
DEVICE FOR ELECTRICALLY CONNECTING AT LEAST FOUR ELECTRICAL CONDUCTORS
DISPOSITIF DE LIAISON ÉLECTRIQUE D'AU MOINS QUATRE CONDUCTEURS ÉLECTRIQUES

(30) Priorität: 08.12.2015 DE 102015224568
(43) Veröffentlichungstag der Anmeldung: 15.08.2018
(73) Patentinhaber: Siemens Aktiengesellschaft, 80333 München (DE)
(72) Erfinder: HOPPE, Jens, 90592 Schwarzenbruck (DE); LOPPACH, Karsten, 90482 Nürnberg (DE); WENDE, Thomas, 90559 Burgthann (DE); WIMMER, Rene Martin, 92353 Postbauer-Heng (DE); MÜLLER, Klaus, 90530 Wendelstein (DE); SCHLAGER, Johann, 90475 Nürnberg (DE)
(86) Internationale Anmeldenummer: PCT/EP2016/077375
(87) Internationale Veröffentlichungsnummer: WO 2017/097533

(56) Entgegenhaltungen:
- EP-A1- 2 442 319
- EP-A1- 2 846 336
- WO-A1-2012/093055
- FR-A- 797 283
- US-A- 3 001 000

## Beschreibung

Die Erfindung betrifft eine Vorrichtung zur elektrischen Verbindung von wenigstens vier elektrischen Leitern mit einem Verbindungselement und wenigstens vier Abschirmungsrohren, die jeweils zur Aufnahme wenigstens eines Leiters vorgesehen sind.

Darüber hinaus betrifft die Erfindung einen Transformator und eine Drosselspule mit einer solchen Vorrichtung.

Die eingangs genannte Vorrichtung, der eingangs genannte Transformator und die eingangs genannte Drosselspule sind aus der WO 2015/036248 A1 bereits bekannt. Dort ist ein Transformator mit drei Wicklungen gezeigt, die über drei stromführende Leiter einander parallel geschaltet sind. Darüber hinaus ist der Transformator mit einer Durchführungselektrode ausgerüstet, die über einen vierten elektrischen Leiter mit den besagten drei Leitern und somit den Wicklungen verbunden ist. Dabei erstrecken sich alle vier Leiter durch jeweils ein Abschirmungsrohr. Jedes Abschirmungsrohr erstreckt sich zu einem Verbindungselement, das mit einer metallischen Elektrode ausgerüstet ist und einen Hohlraum begrenzt. Ein Verbindungselement mit Öffnungen, Hohlraum und innerer Elektrode ist von der Konstruktion her aufwändig und daher kostenintensiv.

Weiterer Stand der Technik ist in der WO 2012/093055 A1, der EP 2442319 A1, der FR 797283 A und der US 3,001,000 A offenbart.

Aufgabe der Erfindung ist es daher, eine Vorrichtung, einen Transformator und eine Drosselspule der eingangs genannten Art bereitzustellen, die eine einfache und kostengünstige Verbindung der elektrischen Leiter ermöglicht.

Die Erfindung löst diese Aufgabe dadurch, dass das Verbindungselement Rohrstutzen ausbildet, die mittels einer stoffschlüssigen Verbindung mit jeweils einem Abschirmungsrohr verbunden sind.

Erfindungsgemäß wird ein Verbindungselement mit Rohrstutzen vorgeschlagen, die jeweils stoffschlüssig mit einem Abschirmungsrohr verbunden sind. Ein Verbindungselement mit einem im Vergleich aufwändigen Gehäuse zum Zusammenführen und Halten der Abschirmungsrohre entfällt erfindungsgemäß. Daher ist die erfindungsgemäße Vorrichtung in ihrer Konstruktion vereinfacht, wodurch sich eine Kostenersparnis ergibt. Darüber hinaus können erfindungsgemäß Ecken und scharfe Kanten noch besser vermieden werden, so dass hohe elektrische Feldstärken vermieden werden können. Mit anderen Worten kann eine dem Stand der Technik entsprechend dimensionierte erfindungsgemäße Vorrichtung, bei gleichen Abständen zu geerdeten Komponenten, höheren Spannungen ausgesetzt werden als die vorbekannte Vorrichtung. Die Rohrstutzen spannen miteinander bezüglich des Verbildungselements einen Winkel auf, bei dem ihre von dem Verbindungselement abgewandten Enden einen möglichst großen Abstand zueinander aufweisen. Die erfindungsgemäße Vorrichtung ist beispielsweise Teil eines Transformators, der einen mit Öl befüllten Transformatorkessel aufweist. Der Transformator ist beispielsweise ein HGÜ-Transformator mit einer Wechselspannung von nahezu 1000kV. Abweichend davon ist die erfindungsgemäße Vorrichtung Teil einer Drosselspule.

Die von den Abschirmungsrohren jeweils geführten elektrischen Leiter sind vorteilhafterweise miteinander elektrisch verbunden. So sind beispielsweise drei der besagten elektrischen Leiter hochspannungsseitig mit Wicklungen eines Transformators verbunden, so dass die Wicklungen parallel geschaltet sind. Der vierte mit den besagten drei Leitern verbundene Leiter führt zu einer Elektrode einer Durchführung.

Vorteilhafterweise bestehen das Verbindungselement und jedes Abschirmungsrohr aus einem elektrisch leitfähigen Material. Vorzugsweise liegen das Verbindungselement und jedes Abschirmungsrohr auf dem Potenzial der Leiter und sind elektrisch mit diesen verbunden. Gemäß dieser vorteilhaften Weiterentwicklung können die elektrischen Feldstärken innerhalb des Transformators besser kontrolliert und eingestellt werden. Spitze Ecken oder Kanten, die hohe elektrische Feldstärken mit sich bringen, sind gemäß dieser Weiterentwicklung vermieden.

Zweckmäßigerweise wird jeder Rohrstutzen mittels Löten oder Schweißen mit dem jeweiligen Abschirmungsrohr verbunden. Gemäß dieser vorteilhaften Weiterentwicklung müssen Verbindungselement und Abschirmungsrohr nicht mehr gemeinsam, also gleichzeitig, hergestellt werden. Die besagten Bauteile können bei dieser Variante vielmehr separat gefertigt und anschließend miteinander verbunden werden. Die Verbindung erfolgt wieder im Sinne der Erfindung durch Stoffschluss, wobei hier Löten oder Schweißen als besonders kostengünstige Stoffverbindungsarten ausgewählt sind. Die separate Herstellung ermöglicht eine weitere Kostensenkung.

Unter einer stoffschlüssigen Verbindung wird hier eine unlösbare Verbindung zwischen Bindungspartnern verstanden, wobei die Bindungspartner durch atomare oder molekulare Kräfte zusammen gehalten werden. Hier kommt neben Löten und Schweißen und Kleben, Vulkanisieren oder dergleichen in Betracht.

Vorteilhafterweise verfügt das Verbindungselement, jeder Rohrstutzen und jedes Abschirmungsrohr an der jeweiligen Außenseite über eine Papierisolation. Die Papierisolation ist beispielsweise eine Papierschicht, die auf die äußere Oberfläche des jeweiligen Bauteils geklebt oder auf andere Art und Weise befestigt wird.

Gemäß einer weiteren Variante der Erfindung sind jedes Abschirmungsrohr und das Verbindungselement von einem Barrierensystem aus Pressspan umgeben. Ist die erfindungsgemäße Vorrichtung in einem Ölbad angeordnet, beispielsweise in dem Ölbad eines Transformators, werden die Ölstrecken durch das Barrierensystem in vorgegebene Abstände unterteilt, wodurch das Isolationsvermögen der erfindungsgemäßen Vorrichtung verbessert wird.

Vorteilhafterweise variiert die Anzahl der Barrieren zwischen 1 und 10. Die Barrieren können im Rahmen der Erfindung grundsätzlich beliebige Formen annehmen, sie können zylinderförmig oder kaminartig ausgestaltet sein und unterschiedliche Durchmesser aufweisen. Vorteilhafterweise überlappen sich die Barrieren mit ihren Enden gegenseitig.

Gemäß einer weiteren Variante der Erfindung sind das Verbindungselement und jedes Abschirmungsrohr in einem Ölbad innerhalb eines Gehäuses eines Transformators oder einer Drosselspule angeordnet.

Vorteilhafterweise ist mindestens einer der Leiter mit jeweils einer Wicklung des Transformators oder der Drosselspule hochspannungsseitig elektrisch verbunden.

Gemäß einer Variante der Erfindung sind die Rohrstutzen unterschiedlich ausgestaltet und/oder weisen unterschiedliche Durchmesser auf. Grundsätzlich ist die Ausgestaltung der Rohrstutzen beliebig. Vorteile ergeben sich jedoch hinsichtlich der Herstellung der erfindungsgemäßen Vorrichtung, wenn die Rohrstutzen beispielsweise zylinderförmig, also hohlzylindrisch, ausgestaltet sind und alle den gleichen Durchmesser aufweisen.

Gemäß einer abweichenden Variante spannen wenigstens ein Rohrstutzen und das ihm zugeordnete Abschirmungsrohr miteinander bezüglich ihrer Kontaktstelle einen Winkel "alpha" von kleiner als 180 Grad auf. Die Rohrstutzen liegen vorteilhafterweise in einer Ebene, so dass die paarweise gegenüber liegenden Rohrstutzen fluchtend zueinander angeordnet sind. Beträgt der besagte Winkel alpha zwischen Abschirmungsrohr und Rohrstutzen genau 180 Grad sind Rohrstutzen Abschirmungsrohr kollinear angeordnet. Das Abschirmungsrohr verläuft genau der gleichen Richtung in der sich auch der Rohrstutzen in seiner Längsrichtung erstreckt. Ist der besagte Winkel jedoch kleiner als 180 Grad und verlaufen die in einer Ebene angeordneten Rohrstutzen genau senkrecht beziehungsweise waagerecht, dann verläuft das abgeschrägte Abschirmungsrohr nicht mehr waagerecht oder horizontal. Vielmehr kann auf diese Weise eine Luftblase im Abschirmungsrohr nach oben wandern. Vorzugsweise liegt der Winkel alpha zwischen 160 und 180 Grad.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei
- Figur 1: eine Querschnittsansicht eines erfindungsgemäßen Transformators mit der erfindungsgemäßen Vorrichtung und
- Figur 2: die Vorrichtung gemäß Figur 1 in einer vergrößerten Darstellung zeigen.

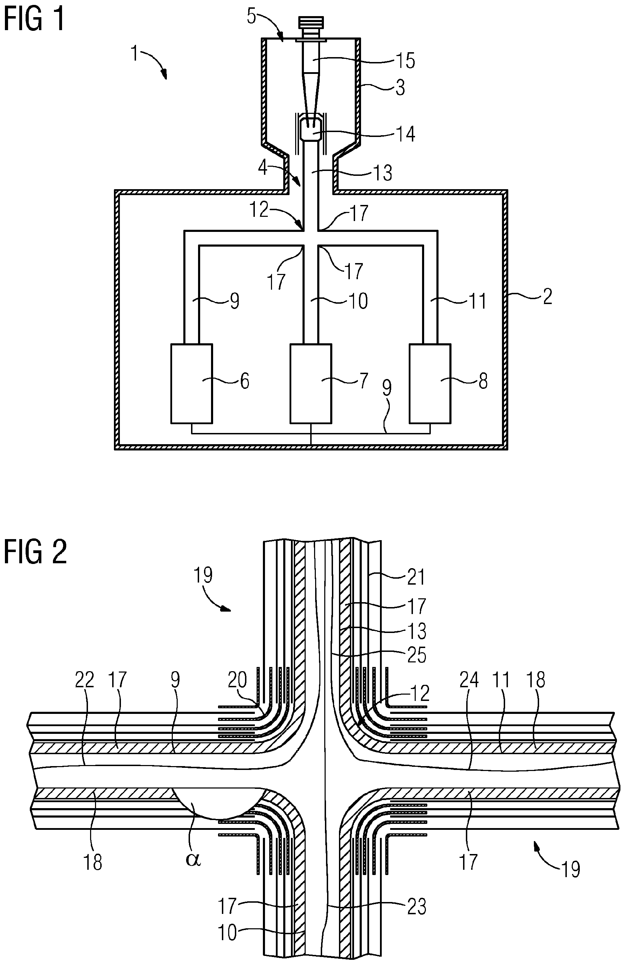

Figur 1 zeigt ein Ausführungsbeispiel des erfindungsgemäßen Transformators 1 in einer geschnittenen Seitenansicht. Der Transformator 1 weist einen Transformatorkessel 2 oder - gehäuse sowie einen an diesen angeformten Dom 3 auf, der eine Ausgangsöffnung 4 des Transformatorkessels 2 nach oben hin zur Ausgangsöffnung 5 erweitert.

Innerhalb des Transformatorkessels 2 sind Wicklungen 6, 7 und 8 erkennbar, die an ihrer Niederspannungsseite zu einem Stern 9 verschaltet und mit dem auf Erdpotenzial liegenden Transformatorkessels 2 verbunden sind. Die Wicklungen 6, 7 und 8 sind ferner über hier figürlich nicht dargestellte Leiter parallel geschaltet. Die Leiter sind in Verbindungsrohren 9, 10 und 11 geführt, die sich zwischen den Wicklungen 6, 7, 8 und einem Verbindungsteil 12 erstrecken. Ein weiteres Abschirmungsrohr 13 erstreckt sich vor dem Verbindungselement 12 zu einer Elektrode 14 zum Kontaktieren einer Durchführung 15.

In Figur 2 ist verdeutlicht, dass das Verbindungselement 12 vier Rohrstutzen 17 aufweist, die in dem gezeigten Beispiel in der Zeichnungsebene angeordnet sind. Mit jedem der besagten Rohrstutzen 17 ist eines der Abschirmungsrohre 9, 10, 11 bzw. 13 stoffschlüssig verbunden. Der Übergang oder die Kontaktstelle zwischen den Rohrstutzen 17 und dem jeweiligen Abschirmungsrohr 9, 10, 11, 12 bzw. 13 ist figürlich nicht dargestellt. Jedes der besagten Abschirmungsrohre 9, 10, 11 und 13 sowie das Verbindungselement 12 mit seinen Rohrstutzen 17 sind ferner mit einer Papierisolation 18 ausgerüstet, welche die besagten Bauteile von außen umschließt. Die Papierisolation weist in dem gezeigten Beispiel eine Dicke von etwa 10 mm auf. Bei abweichenden Ausgestaltungen der Erfindung ist die Papierisolation 18 wesentlich dünner und kann nur wenige Millimeter aufweisen. Bei anderen Varianten ist die Papierisolation 30mm dick. Die Papier-isolation 18 besteht vorteilhafterweise aus übereinander geklebten in verschiedene Richtungen überlappende Papierstreifen. Abweichend hiervon kann jedoch auch eine gegautschte Isolation bereitgestellt sein. Im Ölbad nimmt die Papierisolation das Öl auf, so dass die gewünschte elektrische Isolierung der mit der Hochspannung beaufschlagten Bauteile gegenüber den auf Erdpotenzial liegenden Komponenten des Transformators bereitgestellt ist.

Die Papierisolation 18 ist wiederum von einem aus Pressspan hergestellten Barrierensystem 19 umgeben, das eine Dicke von vorzugsweise 1-3 mm aufweisen. Das Barrierensystem 19 unterteilt die Ölstrecken in vorgegebene Abstände, wodurch sich das Isolationsvermögen erhöht. Mit anderen Worten können bei einer vorgegebenen Spannung die Hochspannung führenden Bauteile näher am Gehäuse angeordnet sein, das auf Erdpotenzial liegt. Die Barrieren oder mit anderen Worten das Barrierensystem 19 besteht aus Pressspan und weist gekrümmte Abschnitte 20 sowie sich rohrförmig oder kanalartig erstreckende Abschnitte 21 auf, die mit ihren freien Enden ineinander eingreifen. In dem Bereich, in dem die besagten Abschnitte 20, 21 mit ihren freien Ende eingreifen liegt in etwas die figürlich nicht dargestellte Kontaktstelle oder mit anderen Worten der Übergang zwischen dem Rohrstutzen 17 und dem Abgangsrohr 9,10,11 bzw. 13, das stoffschlüssig beispielsweise durch Schweißen mit diesem verbunden ist. Bezüglich dieser Schweißnaht spannen der Rohrstutzen und das jeweilige Abgangsrohr 9,10,11 bzw. 13 einen Winkel alpha oder α von 180 Grad auf. Die einander gegenüber liegenden Abgangsrohre 9 und 11 verlaufen daher abschnittsweise waagerecht oder horizontal. In einem hiervon abweichenden Ausführungsbeispiel ist der Winkel alpha jedoch kleiner als 180 Grad, so dass die Abgangsrohre 9 und 11 keinen genau waagerechten Abschnitt aufweisen. Auf diese Weise können Luftblasen nach "oben" also zum Verbindungselement 12 hin aufsteigen.

In Figur 2 sind ferner die in den Abschirmungsrohren 9, 10, 11, 13 geführten Leiter 22, 23, 24 und 25 erkennbar. Die Leiter 22, 23, 24, 25 sind in elektrischem Kontakt mit den metallischen Abschirmungsrohren 9, 10, 11 und 13.

Die Rohrstutzen 17 liegen einander in dem gezeigten Ausführungsbeispiel in der Zeichnungsebene paarweise gegenüber. Dabei wird jeder Rohrstutzen 17 von dem ihm jeweils zugeordneten Abschirmungsrohr 9, 10, 11 bzw. 13 fluchtend verlängert. Die Längsrichtung des Rohrstutzen 17 Der Übergang oder die Kontaktstelle zwischen den Rohrstutzen 17 und dem jeweiligen Abschirmungsrohr 9, 10, 11, 12 bzw. 13 ist figürlich nicht dargestellt.

## Patentansprüche

1. Vorrichtung zur elektrischen Verbindung von wenigstens vier elektrischen Leitern (22,23,24,25) mit
- einem Verbindungselement (12) und
- wenigstens vier Abschirmungsrohren (9,10,11,13), die jeweils zur Aufnahme wenigstens eines Leiters (22,23,24,25) vorgesehen sind,
**dadurch gekennzeichnet, dass**
das Verbindungselement (12) Rohrstutzen (17) ausbildet, die mittels einer stoffschlüssigen Verbindung mit jeweils einem Abschirmungsrohr (9,10,11,13) verbunden sind.

2. Vorrichtung nach Anspruch 1,
**dadurch gekennzeichnet, dass**
das Verbindungselement und jedes Abschirmungsrohr aus einem elektrisch leitfähigen Material bestehen.

3. Vorrichtung nach Anspruch 1 oder 2,
**dadurch gekennzeichnet, dass**
das Verbindungselement (22) mit seinen Rohrstutzen (17) und die Abschirmungsrohre (9,10,11,13) von einer Papierisolation (18) umgeben sind.

4. Vorrichtung nach einem der vorhergehenden Ansprüche,
**dadurch gekennzeichnet, dass**
jeder Rohrstutzen (17) mittels Löten oder Schweißen mit dem jeweiligen Abschirmungsrohr (9,10,11,13) verbunden ist.

5. Vorrichtung nach einem der vorhergehenden Ansprüche,
**dadurch gekennzeichnet, dass**
die Rohrstutzen (17) unterschiedlich ausgestaltet sind und/oder Durchmesser aufweisen.

6. Vorrichtung nach einem der vorhergehenden Ansprüche,
**dadurch gekennzeichnet, dass**
die Rohrstutzen (17) und die jeweils zugeordneten Abschirmungsrohre (9,10,11,13) voneinander abweichende Durchmesser aufweisen.

7. Vorrichtung nach einem der vorhergehenden Ansprüche,
**dadurch gekennzeichnet, dass**
wenigstens ein Rohrstutzen (17) und das ihm zugeordnete Abschirmungsrohr (9,10,11,13) miteinander bezüglich ihrer Kontaktstelle einen Winkel "alpha" von kleiner als 180 Grad aufspannen.

8. Vorrichtung nach einem der Ansprüche 1-7, **dadurch gekennzeichnet, dass**
jedes Abschirmungsrohr (9,10,11,13) und das Verbindungselement (12) von einem Barrierensystem (19) aus Pressspan umgeben sind.

9. Transformator (1) mit einer Vorrichtung nach einem der Ansprüche 1 - 8.

10. Drosselspule mit einer Vorrichtung nach einem der Ansprüche 1 - 8.

11. Transformator nach Anspruch 9 oder Drosselspule nach Anspruch10, **dadurch gekennzeichnet, dass**
das Verbindungselement (12) und jedes Abschirmungsrohr (9,10,11,12) in einem Ölbad innerhalb eines Gehäuses (2) des Transformators (1) oder der Drosselspule angeordnet sind.

12. **Transformator oder Drosselspule** nach Anspruch 11, **dadurch gekennzeichnet, dass**
mindestens einer der Leiter (22,23,24,25) mit jeweils einer Wicklung des Transformators (1) oder der Drosselspule elektrisch leitend verbunden ist.

## Claims

1. Apparatus for electrically connecting at least four electrical conductors (22, 23, 24, 25) comprising
- a connecting element (12) and
- at least four shielding pipes (9, 10, 11, 13), which are each provided to receive at least one conductor (22, 23, 24, 25),
**characterized in that**
the connecting element (12) forms pipe connection pieces (17), which are connected in each case to one shielding pipe (9, 10, 11, 13) by means of a material-bonded connection.

2. Apparatus according to Claim 1, **characterized in that** the connecting element and each shielding pipe consist of an electrically conductive material.

3. Apparatus according to Claim 1 or 2, **characterized in that** the connecting element (22) with the pipe connection pieces (17) thereof and the shielding pipes (9, 10, 11, 13) are surrounded by a paper insulation (18).

4. Apparatus according to any one of the preceding claims, **characterized in that** each pipe connection piece (17) is connected to the respective shielding pipe (9, 10, 11, 13) by means of soldering or welding.

5. Apparatus according to any one of the preceding claims, **characterized in that** the pipe connection pieces (17) are configured differently and/or have different diameters.

6. Apparatus according to any one of the preceding claims, **characterized in that** the pipe connection pieces (17) and the respectively associated shielding pipes (9, 10, 11, 13) have different diameters from one another.

7. Apparatus according to any one of the preceding claims, **characterized in that** at least one pipe connection piece (17) and the shielding pipe (9, 10, 11, 13) associated therewith span an angle "alpha" of less than 180 degrees with one another with respect to their contact point.

8. Apparatus according to any one of Claims 1-7, **characterized in that** each shielding pipe (9, 10, 11, 13) and the connecting element (12) are surrounded by a barrier system (19) made of pressboard.

9. Transformer (1) having an apparatus according to any one of Claims 1-8.

10. Inductor having an apparatus according to any one of Claims 1-8.

11. Transformer according to Claim 9 or inductor according to Claim 5, **characterized in that** the connecting element (12) and each shielding pipe (9, 10, 11, 13) are arranged in an oil bath inside a housing (2) of the transformer (1) or the inductor.

12. Transformer or inductor according to Claim 11, **characterized in that** at least one of the conductors (22, 23, 24, 25) is electrically conductively connected in each case to one winding of the transformer (1) or the inductor.

## Revendications

1. Dispositif de liaison électrique d'au moins quatre conducteurs (22, 23, 24, 25) électriques, comprenant
- un élément (12) de liaison et
- au moins quatre tubes (9, 10, 11, 13) de blindage, prévus chacun pour recevoir au moins un conducteur (22, 23, 24, 25),
**caractérisé en ce que**
l'élément (12) de liaison constitue des tubulures (17), qui sont reliées à, respectivement, un tube (9, 10, 11, 13) de blindage, au moyen d'une liaison à coopération de matière.

2. Dispositif suivant la revendication 1,
**caractérisé en ce que**
l'élément de liaison et chaque tube de blindage sont en un matériau conducteur de l'électricité.

3. Dispositif suivant la revendication 1 ou 2,
**caractérisé en ce que**
l'élément (22) de liaison, avec sa tubulure (17) et les tubes (9, 10, 11, 13) de blindage, sont entourés d'un isolant (18) en papier.

4. Dispositif suivant l'une des revendications précédentes,
**caractérisé en ce que**
chaque tubulure (17) est reliée au tube (9, 10, 11, 13) respectif de blindage, au moyen d'une brasure ou d'une soudure.

5. Dispositif suivant l'une des revendications précédentes,
**caractérisé en ce que**
les tubulures (17) sont conformées différemment et/ou ont des diamètres différents.

6. Dispositif suivant l'une des revendications précédentes,
**caractérisé en ce que**
la tubulure (17) et le tube (9, 10, 11, 13) de blindage associé, respectivement, ont des diamètres différents l'un de l'autre.

7. Dispositif suivant l'une des revendications précédentes,
**caractérisé en ce qu'**
au moins une tubulure (17) et le tube (9, 10, 11, 13) de blindage, qui lui est associé, font entre eux, en ce qui concerne le point de contact, un angle « alpha » plus petit que 180 degrés.

8. Dispositif suivant l'une des revendications 1 à 7,
**caractérisé en ce que**
chaque tube (9, 10, 11, 13) de blindage et l'élément (12) de liaison sont entourés d'un système (19) formant barrière en carton comprimé.

9. Transformateur (1) ayant un dispositif suivant l'une des revendications 1 à 8.

10. Bobine de self ayant un dispositif suivant l'une des revendications 1 à 8.

11. Transformateur suivant la revendication 9 ou bobine de self suivant la revendication 10,
**caractérisé en ce que**
l'élément (12) de liaison et chaque tube (9, 10, 11, 12) de blindage sont disposés dans un bain d'huile à l'intérieur d'une enveloppe (2) du transformateur (1) ou de la bobine de self.

12. Transformateur ou bobine de self suivant la revendication 11,
**caractérisé en ce que**
au moins l'un des conducteur (22, 23, 24, 25) est relié d'une manière conductrice de l'électricité à, respectivement, un enroulement du transformateur (1) ou à la bobine de self.
